# EUROPEAN PATENT SPECIFICATION

(11) **EP 0 577 371 B1**
(45) Date of publication and mention of the grant of the patent: **05.11.1997**
(21) Application number: 93305042.9
(22) Date of filing: 28.06.1993
(51) Int. Cl.: A23D 9/00, A23L 1/24, C11C 3/04, A23G 9/00, A23D 7/00, A21D 6/00

(54) **Freezing-resistant oil-and-fat feedstock, method for producing said feedstock and frozen food containing said feedstock**
Frostbeständiges Öl-und-Fett-Ausgangsmaterial, Verfahren zur Herstellung dieses Ausgangsmaterial und dieses Ausgangsmaterial enthaltende, eingefrorene Lebensmittel
Matière première contenant de l'huile de la graisse et résistant au gel, procédé de fabrication de cette matière première et aliments congelés la renfermant

(30) Priority: 29.06.1992 JP 196181/92
(43) Date of publication of application: 05.01.1994
(73) Proprietor: FUJI OIL COMPANY, LIMITED, Osaka-shi, Osaka-fu 542 (JP)
(72) Inventor: Hidaka, Hiroshi, Sakai-shi, Osaka-fu (JP); Nishimoto, Tsugio, Naga-gun, Wakayama-ku (JP); Izumi, Tsugio, Kumatori-cho, Sennan-gun, Osaka-fu (JP)
(74) Representative: Baverstock, Michael George Douglas

(56) References cited:
- EP-A- 0 035 883
- EP-A- 0 305 901
- WO-A-89/09596
- WO-A-92/19237
- DATABASE WPI Week 9216, Derwent Publications Ltd., London, GB; AN 92-126432 & JP-A-4 066 052 (AJINOMOTO KK) 2 March 1992
- DATABASE WPI Week 8644, Derwent Publications Ltd., London, GB; AN 86-287696 & JP-A-61 209 544 (UEDA SEIYU KK) 17 September 1986

## Description

The present invention relates to a freezing-resistant oil-and-fat feedstock which is suitable for use in oil-and-fat ingredient-containing foods, such as mayonnaise, dressings, frozen desserts, frozen dough and margarine. It also relates to a method for producing the freezing-resistant oil-and-fat feedstock and to various kinds of frozen food containing the freezing-resistant oil-and-fat feedstock.

The freezing temperature (i.e., melting point) of oil-and-fat feedstocks may vary over a significantly wide range, which results in their distribution in the state of from solid to liquid at ordinary temperatures, depending upon their composition. In general, oil-and-fat feedstocks partially crystallize at refrigerator temperatures (of from room temperature to about 0°C) causing clouding or turbidity, and totally solidify at freezer temperatures (of lower than 0°C, typically about -20°C). When emulsified food containing an ordinary liquid fatty oil, such as dressings and mayonnaise, is allowed to freeze and thaw, its emulsification state is broken, thereby causing the separation of an oil phase. Therefore, emulsified food such as mayonnaise is not used as a food material to be separately enclosed within the main package of frozen food such as frozen fries with batter. For the same reason, it is difficult to produce custard cream and custard cream-containing food as frozen food.

So far as the present inventors know, no attempt has hitherto been known to improve the freezing resistance of oil-and-fat feedstocks.

As an oil-and-fat feedstock for enteral nutrient of patients suffering from hepatopathy or the like, there have hitherto been known SUS-type (1,3-disaturated-2-unsaturated) triglycerides having middle-chain fatty acid residues of 8 to 12 carbon atoms at the 1st and 3rd positions and a long-chain unsaturated fatty acid residue with two or more unsaturated groups at the 2nd position (see, e.g., JP-A 63-297342). It is also known that the oil-and-fat feedstock can be utilized in mayonnaise, dressings and the like because it is in a liquid state at ordinary temperatures, although it is unknown whether this oil-and-fat feedstock can be used as a freezing-resistant oil-and-fat material (see also JP-A 63-297342). Further, it is disclosed that another SUS-type triglyceride, 1,3-didecanoyl-2-Canola glyceride is useful as an oil-and-fat feedstock for enteral or parenteral nutrient (see, e.g., JP-A 4-500971).

These conventional feedstocks are, however, unsatisfactory as a general purpose edible oil-and-fat feedstock from an economical point of view because they are products of high purity for pharmaceutical use and many steps are required for their purification.

It is well known that the melting point of oil-and-fat feedstocks has a tendency to increase with increase in chain length of their substituent fatty acid residues or in the degree of saturation. It is, however, difficult to predict the melting point of complex mixed fatty acid triglycerides. For example, even in the case of trilinolenin (linolenic acid triglyceride) which is ordinarily supposed to have a low melting point, its melting point is only -23°C. Moreover, oil-and-fat feedstocks have the property of polymorphism; for example, triolein can take different forms, such as β-form (m.p., 4.9°C), β'-form (m.p., -12°C) and α-form (m.p., -32°C), so that crystal deposition may be caused even at relatively high temperatures such as at about refrigerator temperatures.

Under these circumstances, the present inventors have carried out various studies for the purpose of conferring stable freezing resistance to edible oil-and-fat feedstocks. As the result, they have found that the freezing resistance of oil-and-fat feedstocks can be improved by increasing, to a certain extent or more, the amount of mixed fatty acid triglycerides (U₂M and UM₂) consisting of unsaturated fatty acid residues (U) and middle-chain saturated fatty acid residues (M) in the oil-and-fat feedstocks, and also by increasing the ratio of U₂M to UM₂ to a certain extent or higher.

The present invention provides a freezing-resistant oil-and-fat feedstock which is suitable for improving the freezing resistance of oil-and-fat ingredient-containing foods such as salad oil, dressing, mayonnaise, frozen dessert (e.g., ice cream), frozen dough and margarine.

The present invention also provides a method for producing a freezing-resistant oil-and-fat feedstock as described above.

The present invention additionally provides various kinds of frozen food utilizing a freezing-resistant oil-and-fat feedstock as described above, such as salad oil, dressings, mayonnaise, frozen desserts (e.g., ice cream), frozen dough and margarine.

According to the present invention, there is provided a freezing-resistant oil-and-fat feedstock comprising mixed fatty acid triglycerides (U₂M and UM₂) at an amount of 10% by weight or more, based on the total weight of the feedstock, the mixed fatty acid triglycerides consisting of unsaturated fatty acid residues (U) and middle-chain saturated fatty acid residues (M) and the ratio of U₂M to UM₂ being l/3 or higher. The freezing-resistant oil-and-fat feedstock is suitable for improving the freezing resistance of oil-and-fat ingredient-containing foods such as salad oil, dressings, mayonnaise, frozen desserts (e.g., ice cream), frozen dough and margarine.

In another aspect, the present invention provides a method for producing a freezing-resistant oil-and-fat feedstock, comprising: (1) introducing middle-chain fatty acid residues (M) by ester interchange into a fatty oil which is in liquid state at ordinary temperatures or (2) mixing a freezing-resistant oil-and-fat feedstock as described above with a fatty oil which is in liquid state at ordinary temperatures, so that the total amount of mixed fatty acid triglycerides (U₂M and UM₂) becomes 10% by weight or more, based on the total weight of the feedstock, and the ratio of U₂M to UM₂, becomes 1/3 or higher.

In still another aspect, the present invention provides various kinds of frozen food comprising a substantial arnount of a freezing-resistant oil-and-fat feedstock as described above, such as salad oil, dressings, mayonnaise, frozen desserts (e.g., ice cream), frozen dough and margarine.

The freezing-resistant oil-and-fat feedstock of the present invention comprises mixed fatty acid triglycerides (U₂M and UM₂) at an amount of 10% by weight or more, based on the total weight of the feedstock, the mixed fatty acid triglycerides consisting of unsaturated fatty acid residues (U) and middle-chain saturated fatty acid residues (M) and the ratio of U₂M to UM₂ being l/3 or higher.

As used herein, the term "oil-and-fat" refers to a substance composed of mainly of triglycerides which are triesters of glycerol with fatty acids. In general, oil-and-fat ingredients are classified into fatty oils which are in liquid state at ordinary temperatures and fats which are in solid state at ordinary temperatures.

The unsaturated fatty acid residues may preferably contain 16 to 24 carbon atoms, typical examples of which are linolenic acid and linolenic acid, both having 18 carbon atoms.

As used herein, the term "middle-chain fatty acid" refers to a straight-chain saturated fatty acid of 4 to 10 carbon atoms, preferably 4 to 8 carbon atoms.

If the total amount of U₂M and UM₂ is less than 10% by weight, the desired low-melting oil-and-fat feedstocks (triglyceride compositions) cannot be obtained. Also, if the amount of UM₂ in the mixed fatty acid glycerides is increased and therefore the ratio of U₂M to UM₂ becomes less than 1/3, the oil-and-fat feedstock obtained has a tendency to solidify readily at the time of freezing, thereby making it impossible to attain the purpose of the present invention.

The freezing-resistant oil-and-fat feedstock of the present invention may further comprise mixed fatty acid triglycerides (U₂S, US₂ and S₃) consisting of fatty acid residues selected from unsaturated fatty acid residues (U) and long-chain saturated fatty acid residues (S) of 12 or more carbon atoms.

The amount of long-chain saturated fatty acid residues (S) of 12 or more carbon atoms in the oil-and-fat feedstock of the present invention may be defined according to the fatty acid composition of the oil-and-fat ingredient raw material. In general, it is desirable that the total amount of S₂U and S₃ is 10% by weight or less and the amount of SU₂ is 30% by weight or less, both based on the total weight of the feedstock. When any liquid fatty oil is used as an oil-and-fat ingredient raw material, these conditions are both satisfied inevitably because liquid fatty oils contain little amount of long-chain saturated fatty acids.

The oil-and-fat feedstock of the present invention has a freezing resistance at temperatures of -20°C or lower. Utilizing this property, the freezing resistance of oil-and-fat ingredient-containing foods such as salad oil, dressings, mayonnaise, frozen desserts (e.g., ice cream), frozen dough and margarine can be significantly improved, which makes it possible processing or using the food of this kind at low temperatures of about refrigerator temperatures or lower.

It is ordinarily expected that the melting point of the oil-and-fat feedstock of the present invention will be decreased with an increase in the amount of triunsaturated triglycerides in the oil-and-fat feedstock. Even if a large amount of triunsaturated fatty acid triglycerides (U₃) are used together with M₂U-type triglycerides of 4 to 10 carbon atoms as described above, however, the melting point of the oil-and-fat feedstock obtained is not decreased as expected, but rather it is not substantially different from the melting point of the oil-and-fat feedstock in which a relatively large amount of MU2-type triglycerides of 4 to 10 carbon atoms are mixed with M₂U-type triglycerides as described above. On the other hand, the oxidation-resistance stability of the oil-and-fat feedstock is reduced with an increase in the amount of unsaturated fatty acid residues, and it is, therefore, desirable from a practical point of view that the oil-and-fat feedstock is produced so as to have a decreased melting point when the amount of triunsaturated fatty acid triglycerides is reduced as much as possible. As shown in Example 2 below, when the ratio of U₂M to UM₂ (wherein the middle-chain saturated fatty acid residue (M) has 6 carbon atoms) is about 1/1.4, the melting point of the oil-and-fat feedstock is reduced to -33.5°C.

The freezing-resistant oil-and-fat feedstock of the present invention can be produced by ester interchange of a fatty oil having a low amount of saturated fatty acid residues (i.e., fatty oil in liquid state at ordinary temperatures) with a free fatty acid of 4 to 10 carbon atoms or its ester with a monohydric, dihydric or trihydric lower alcohol. Examples of the fatty oil are safflower oil, high-oleic safflower oil, sunflower oil, high-oleic sunflower oil, rapeseed oil, mustard seed oil, cotton seed oil, olive oil and soybean oil. Examples of the free fatty acid are butyric acid, capric acid and caprylic acid. Examples of the fatty acid ester are ethyl caprate, tributyrin and tricaprylin.

As used herein, the term "ordinary temperatures" refers to a temperature range of from 15°C to 25°C according to the Japanese Industrial Standard (JIS). The term "room temperature" is interchangeably used with the term "ordinary temperatures" in the context of this specification.

The ester interchange may be selectively conducted by an enzyme method. For example, a certain kind of lipase having selective reactivity with fatty acid residues at the 1st and 3rd positions of triglycerides, such as Lipozyme (Novo), Talipase (Tanabe Seiyaku), Lipase D, Lipase AP or Lipase M-AP (the latter three are available from Amano), is preferably attached to an appropriate solid support such as polysaccharide derivatives, polyacrylamide gel, polystyrene, porous glass, silica gel or alumina. With the use of such an immobilized enzyme, the fatty oil is subjected to ester interchange with a free fatty acid or its ester as a donor.

If desired, an ordinary post-treatment such as alkali washing, steam distillation, polymer membrane treatment, ionic resin treatment or solvent fractionation may be employed for purification of the ester interchange product. In many cases, however, the production without employing such a particular purification technique is usually the better for the purpose of obtaining a low-melting oil-and-fat feedstock. In particular, when a certain triglyceride is used as a donor, the desired low-melting oil-and-fat feedstock can be obtained only with separation of a catalyst from the reaction mixture by a conventional method.

The freezing-resistant oil-and-fat feedstock of the present invention has an extremely low melting point, so that it does not solidify even at low temperatures such as about freezer temperatures. Therefore, even if a certain kind of oil-and-fat ingredient-containing food such as salad oil, dressings, mayonnaise, frozen desserts (e.g., ice crearn), frozen dough or margarine, which has been prepared using this feedstock as all or some of its oil-and-fat ingredients, is stored in frozen state, there is no occurrence of any defect such as turbidity, roughening, oil phase separation and cracking. In addition, the oil-and-fat feedstock of the present invention has excellent emulsifiability because it contains some amount of middle-chain fatty acid residues, which results in an advantage that any emulsified food such as cream, mayonnaise and dressing has little tendency to cause oil phase separation even if stored at low temperatures such as below 0°C.

The present invention is further illustrated by way of the following examples and comparative examples, which are not to be construed to limit the scope thereof.

### Examples 1-7 and Comparative Example 1

According to the formulations as shown in Table 1 below, various oil-and-fat feedstocks were produced by subjecting the respective oil-and-fat ingredient raw material and donor to ester interchange using a particular kind of lipase having selective reactivity with fatty acid residues at the 1st and 3rd positions of triglycerides according to a conventional method. The type and amount of triglycerides contained in the oil-and-fat feedstock and the melting point (°C) as measured by differential scanning calorimetry (DSC) are also shown in Table 1.

**TABLE 1**

| Example No. | Raw materials | | Composition | | m.p. (°C)³⁾ |
|---|---|---|---|---|---|
| | Kind | Amount (grams) | Type¹⁾ | Amount (wt%)²⁾ | |
| Example 1 | Safflower oil | 200 | C₈-U-C₈ | 61 | -21 |
| | Ethyl octanoate | 400 | C₈-U-U | 26 | |
| | | | U-U-U | 2.4 | |
| Comp. Example 1 | Safflower oil | 100 | C₈-U-C₈ | 72 | -16 |
| | Ethyl octanoate | 400 | C₈-U-U | 18 | |
| | | | U-U-U | 2.0 | |
| Example 2 | Safflower oil | 200 | C₆-U-C₆ | 50 | -33.5 |
| | Ethyl hexanoate | 330 | 6₆-U-U | 36.1 | |
| | | | U-U-U | 3.8 | |
| Example 3 | High-oleic safflower oil | 200 | C₆-U-C₆ | 53 | -28.0 |
| | Ethyl hexanoate | 330 | C₆-U-U | 34 | |
| | | | U-U-U | 3.9 | |
| Example 4 | Safflower oil | 280 | C₈-U-C₈ | 6.3 | -26.0 |
| | Tricaprylin | 20 | C₈-U-U | 30.8 | |
| | | | U-U-U | 42.8 | |
| Example 5 | Sunflower oil | 190 | U-U-U | 54.4 | -34.0 |
| | Tributyrin | 10 | C₄-U-U | 19.9 | |
| | | | C₄-U-C₄ | 1.9 | |
| Example 6 | High-oleic sunflower oil | 200 | C₈-U-C₈ | 58.2 | -26.0 |
| | Ethyl octanoate | 400 | C₈-U-U | 27.7 | |
| | | | U-U-U | 2.9 | |
| Example 7 | Soybean oil | 285 | C₈-U-C₈ | 1.2 | -23.0 |
| | Tricaprylin | 15 | C₈-U-U | 16.0 | |
| | | | U-U-U | 42.3 | |

| | | | | | |
|---|---|---|---|---|---|
| 1) For example, C₈-U-C₈ denotes a mixed fatty acid triglyceride having saturated fatty acid residues of 8 carbon atoms at the 1st and 3rd positions thereof and an unsaturated fatty acid residue at the 2nd position thereof. | | | | | |
| 2) Percent by weight. | | | | | |
| 3) Melting point of the oil-and-fat feedstock as measured by DSC in which an oil-and-fat feedstock sample was held at -60°C for 5 minutes to solidify and then the temperature was gradually raised at a rate of 5°C/min. | | | | | |

### Example 8

The oil-and-fat feedstock of Example 1 was mixed with safflower oil at various ratios as shown in Table 2 below, resulting in various freezing-resistant oil-and-fat feedstocks. The melting point (°C) and peak area ratio (%) as determined by differential scanning calorimetry (DSC) are also shown in Table 2.

**TABLE 2**

| Ingredient | Mixing ratio (wt%)¹⁾ | | | | | | | |
|---|---|---|---|---|---|---|---|---|
| Oil-and-fat feedstock of Example 1 | 100 | 70 | 50 | 30 | 20 | 10 | 5 | 0 |
| Safflower oil | 0 | 30 | 50 | 70 | 80 | 90 | 95 | 100 |

| m.p. (°C)²⁾ | | | | | | | | |
|---|---|---|---|---|---|---|---|---|
| High | | | | | | -14.3 | -14.2 | -14.0 |
| Low | -20.9 | -22.2 | -24.4 | -24.3 | -24.3 | -24.2 | -24.2 | |

| Peak area ratio (%)³⁾ | | | | | | | | |
|---|---|---|---|---|---|---|---|---|
| C₈-U-C₈ | 61 | | | | 12 | 6 | 3 | 0 |
| C₈-U-U | 26 | | | | 5 | 3 | 1.4 | 0 |

| | | | | | | | | |
|---|---|---|---|---|---|---|---|---|
| 1) Percent by weight. | | | | | | | | |
| 2) High and low peaks corresponding to the melting point of the oil-and-fat feedstock observed in the measurement by DSC. | | | | | | | | |
| 3) For example, C₈-U-U denotes a mixed fatty acid triglyceride having a saturated fatty acid residues of 8 carbon atoms at the 1st position thereof and unsaturated fatty acid residues at the 2nd and 3rd positions thereof. | | | | | | | | |

### Example 9 (Application Example 1)

According to the following formulation, various mayonnaise preparations were produced by a conventional method.

| Ingredient | wt% |
|---|---|
| Oil | 70 |
| Egg yolk | 16 |
| Vinegar | 12 |
| Salt | 2 |

As the oil ingredient, soybean oil, rapeseed oil, safflower oil or each of the oil-and-fat feedstocks of Example 4 and 7 (Example 4: safflower oil/C₈ triglycerides; Example 7: soybean oil/C₈ triglycerides) was used.

The mayonnaise preparations were respectively taken in 10 g portions into separate hexagonal vessels, and stored at temperatures of -20°C or -25°C for a predetermined period of from several days to 3 months, after which these mayonnaise preparations were thawed at a room temperature of 20°C and observed for their emulsion state after the thawing. The results are shown in Table 3 below.

**TABLE 3**

| Oil-and-fat ingredient raw material | Storage period and temperature (°C) | | | | | | | |
|---|---|---|---|---|---|---|---|---|
| | 3 days | | 10 days | | 1 month | | 3 months | |
| | -20 | -25 | -20 | -25 | -20 | -25 | -20 | -25 |
| Soybean oil | X | X | XX | XX | XX | XX | XX | XX |
| Rapeseed oil | XX | XX | XX | XX | XX | XX | XX | XX |
| Safflower oil | ○ | ○ | X | XX | XX | XX | XX | XX |
| Oil-and-fat feedstock of Example 4 | ○ | ○ | ○ | ○ | ○ | ○ | ○ | ○ |
| Oil-and-fat feedstock of Example 7 | ○ | ○ | ○ | ○ | ○ | ○ | ○ | ○ |
| Evaluation: ○ , good; X, slightly oil phase separated; and XX, completely oil phase separated. | | | | | | | | |

As can be seen from Table 3, the oil-and-fat feedstocks of Examples 4 and 7 conferred freezing resistance to the mayonnaise preparations produced therefrom.

### Example 10 (Application Example 2)

According to the following formulation, various French dressing preparations (emulsion type) were produced by a conventional method.

| Ingredient | wt% |
|---|---|
| Oil | 35.0 |
| Water | 36.7 |
| Vinegar | 19.0 |
| Thickening polysaccharide | 0.3 |
| Salt | 3.0 |
| Egg | 3.0 |
| Fructose and liquid glucose | 4.0 |

As the oil ingredient, soybean oil, rapeseed oil or each of the oil-and-fat feedstocks of Example 2 and 5 (Example 2: safflower oil/C₆ triglycerides; Example 5: sunflower oil/C₄ triglycerides) was used.

The dressing preparations were respectively taken in 10 g portions into separate hexagonal vessels, and stored at temperatures of -20°C or -25°C for a predetermined period of from several days to 1 month, after which these dressing preparations were thawed at a room temperature of 20°C and observed for their emulsion state after the thawing. The results are shown in Table 4 below.

**TABLE 4**

| Oil-and-fat ingredient raw material | Storage period | | and temperature (°C) | |
|---|---|---|---|---|
| | 5 days | | 1 month | |
| | -20 | -25 | -20 | -25 |
| Soybean oil | XX | XX | XX | XX |
| Rapeseed oil | XX | XX | XX | XX |
| Oil-and-fat feedstock of Example 2 | ○ | ○ | ○ | ○ |
| Oil-and-fat feedstock of Example 5 | ○ | ○ | ○ | ○ |
| Evaluation: ○ , good; X, slightly oil phase separated; and XX, completely oil phase separated. | | | | |

As can be seen from Table 4, the oil-and-fat feedstocks of Examples 2 and 5 conferred freezing resistance to the dressing preparations produced therefrom.

## Claims

1. A freezing-resistant oil-and-fat feedstock comprising mixed fatty acid triglycerides (U₂M and UM₂) at an amount of 10% by weight or more, based on the total weight of the feedstock, said mixed fatty acid triglycerides consisting of unsaturated fatty acid residues (U) and straight-chain saturated fatty acid residues of 4 to 10 carbon atoms (M) and the ratio of U₂M to UM₂ being 1/3 or higher.

2. A freezing-resistant oil-and-fat feedstock as claimed in claim 1, wherein said straight-chain saturated fatty acid residue is of 4 to 8 carbon atoms.

3. A freezing-resistant oil-and-fat feedstock as claimed in claim 1 or claim 2, further comprising fatty acid triglycerides (U₂S, US₂ and S₃) consisting of fatty acid residues selected from unsaturated fatty acid residues (U) and long-chain saturated fatty acid residues (S), the total amount of S₂U and S₃ being 10% by weight or less and the amount of SU₂ being 30% by weight or less, both based on the total weight of the feedstock.

4. A freezing-resistant oil-and-fat feedstock as claimed in claim 3, wherein said long-chain saturated fatty acid residue has 12 or more carbon atoms.

5. A method for producing a freezing-resistant oil-and-fat feedstock comprising introducing straight-chain saturated fatty acid residues of 4 to 10 carbon atoms (M) by ester interchange into a fatty oil which is in a liquid state at ordinary temperatures, so that the total amount of mixed fatty acid triglycerides (U₂M and UM₂) consisting of unsaturated fatty acid residues (U) and straight-chain saturated fatty acid residues of 4 to 10 carbon atoms (M) becomes 10% by weight or more, based on the total weight of the feedstock, and the ratio of U₂M to UM₂ becomes 1/3 or higher.

6. A method as claimed in claim 5, wherein said ester interchange is conducted using a specific kind of lipase having selective reactivity with fatty acid residues at the 1st and 3rd positions of triglycerides.

7. A method as claimed in claim 5 or claim 6, wherein said fatty oil is selected from safflower oil, high-oleic safflower oil, sunflower oil, high-oleic sunflower oil, rapeseed oil, mustard seed oil, cotton seed oil, olive oil and soybean oil.

8. A method as claimed in any one of claims 5 to 7, wherein said fatty oil is subjected to ester interchange with a free fatty acid or its ester selected from butyric acid, capric acid, caprylic acid, ethyl caprate, tributyrin and tricaprylin.

9. A method for producing a freezing-resistant oil-and-fat feedstock, comprising mixing a freezing-resistant oil-and-fat feedstock according to claim 1 with a fatty oil which is in a liquid state at ordinary temperatures, so that the total amount of mixed fatty acid triglycerides (U₂M and UM₂)consisting of unsaturated fatty acid residues (U) and straight-chain saturated fatty acid residues of 4 to 10 carbon atoms (M) becomes 10% by weight or more, based on the total weight of the feedstock, and the ratio of U₂M to UM₂ become 1/3 or higher.

10. A method as claimed in claim 9, wherein said fatty oil is selected from safflower oil, high-oleic safflower oil, sunflower oil, high-oleic sunflower oil, rapeseed oil, mustard seed oil, cotton seed oil, olive oil and soybean oil.

11. A frozen food comprising a substantial amount of a freezing-resistant oil-and-fat feedstock according to claim 1.

12. A frozen food according to claim 11, which is salad oil, dressings, mayonnaise, frozen desserts, frozen dough or margarine.

## Patentansprüche

1. Gefrierresistentes Öl-und-Fett-Ausgangsmaterial, umfassend gemischte Fettsäuretriglyceride (U₂M und UM₂) in einer Menge von 10 Gew.% oder mehr, bezogen auf das Gesamtgewicht des Ausgangsmaterials, wobei die gemischten Fettsäuretriglyceride aus ungesättigten Fettsäureresiten (U) und geradkettigen gesättigten Fettsäureresten mit 4 bis 10 Kohlenstoffatomen (M) bestehen und das Verhältnis von U₂M zu UM₂ 1/3 oder höher ist.

2. Gefrierresistentes Öl-und-Fett-Ausgangsmaterial nach Anspruch 1, worin der geradkettige, gesättigte Fettsäurerest 4 bis 8 Kohlenstoffatome hat.

3. Gefrierresistentes Öl-und-Fett-Ausgangsmaterial nach Anspruch 1 oder 2, weiterhin umfassend Fettsäuretriglyceride (U₂2, US₂ und S₃), bestehend aus Fettsäureresten, ausgewählt aus ungesättigten Fettsäureresten (U) und langketigen, gesättigten Fettsäureresten (S), wobei die Gesamtmenge von S₂U und S₃ 10 Gew.% oder weniger und die Menge an SU₂ 30 Gew.% oder weniger ist, jeweils bezogen auf das Gesamtgewicht des Ausgangsmaterials.

4. Gefrierresistentes Öl-und-Fett-Ausgangsmaterial nach Anspruch 3, worin der langkettige, gesättigte Fettsäurerest 12 oder mehr Kohlenstoffatome hat.

5. Verfahren zur Erzeugung eines gefrierresistenten Öl-und-Fett-Ausgangsmaterials, umfassend das Einführen von geradkettigen, gesättigten Fettsäureresten mit 4 bis 10 Kohlenstoffatomen (M) durch Esteraustausch in ein Fettöl, das bei normalen Temperaturen in flüssigem Zustand vorliegt, so daß die Gesamtmenge der gemischten Fettsäuretriglyceride (U₂M und UM₂), bestehend aus ungesättigten Fettsäureresten (U) und geradkettigen, gesättigten FEttsäureresten mit 4 bis 10 Kohlenstoffatomen (M) 10 Gew.% oder mehr, bezogen auf das Gesamtgewicht des Ausgangsmaterials, und das Verhältnis von U₂M zu UM₂ 1/3 oder mehr wird.

6. Verfahren nach Anspruch 5, worin der Esteraustausch unter Verwendung einer spezifischen Art von Lipae mit einer selektiven Reaktivität mit Fettsäureresten an der ersten und dritten Position von Triglyceriden durchgeführt wird.

7. Verfahren nach Anspruch 5 oder 6, worin das Fettöl ausgewählt ist aus Safloröl, sehr ölhaltigem Safloröl, Sonnenbumenöl, sehr ölhaltigem Sonnenblumenöl, Rapssamenöl, Senfsamenöl, Baumwollsamenöl, Olivenöl und Sojabohnenöl.

8. Verfahren nach einem der Ansprüche 5 bis 7, worin das Fettöl einem Esteraustausch mit einer freien Fettsäure oder ihrem Ester, ausgewählt aus Buttersäure, Caprinsäure, Caprylsäure, Ethylcaprat, Tributyrin und Tricaprylin, unterworfen wird.

9. Verfahren zur Herstellung eines gefrierresistenten Öl-und-Fett-Ausgangsmaterials, umfassend das Mischen eines gefrierresistenten Öl- und Fett-Ausgangsmaterials nach Anspruch 1 mit einem Fettöl, das bei normaler Temperatur in flüssigem Zustand vorliegt, so daß die Gesamtmenge an gemischten Fettsäuretriglyceriden (U₂M und UM₂), bestehend aus ungesättigten Fettsäureresten (U) und geradkettigen, gesättigten Fettsäureresten mit 4 bis 10 Kohlenstoffatomen (M) 10 Gew.% oder mehr, bezogen auf das Gesamtgewicht des Ausgangsmaterials, und das Verhältnis von U₂M zu UM₂ 1/3 oder mehr wird.

10. Verfahren nach Anspruch 9, worin das Fettöl ausgewählt ist aus Safloröl, sehr ölhaltigem Safloröl, Sonnenbumenöl, sehr ölhaltigem Sonnenblumenöl, Rapssamenöl, Senfsamenöl, Baumwollsamenöl, Olivenöl und Sojabohnenöl.

11. Tiefkühlkost, umfassend eine wesentliche Menge eines gefrierresistenten, Öl-und-Fett-Ausgangsmaterials nach Anspruch 1.

12. Tiefkühlkost nach Anspruch 11, die Salatöl, Dressing, Mayonnaise, gefrorenes Dessert, gefrorener Teig oder Margarine ist.

## Revendications

1. Charge de départ huile-et-graisse résistant à la congélation, comprenant des triglycérides d'acides gras mixtes (U₂M et UM₂) en une proportion de 10% en poids ou plus, sur base du poids total de la charge de départ, lesdits triglycérides d'acides gras mixtes étant constitués de résidus d'acides gras insaturés (U) et de restes d'acides gras saturés à chaîne droite comportant de 4 à 10 atomes de carbone (M) et le rapport U₂M à UM₂ étant de 1/3 ou plus.

2. Charge de départ huile-et-graisse résistant à la congélation suivant la revendication 1, caractérisée en ce que ledit reste d'acide gras saturé à chaîne droite possède de 4 à 8 atomes de carbone.

3. Charge de départ huile-et-graisse résistant à la congélation suivant la revendication 1 ou la revendication 2, caractérisée en ce qu'elle comprend, en outre, des triglycérides d'acides gras (U₂S, US₂ et S₃) constitués de restes d'acides gras choisis parmi les restes d'acides gras insaturés (U) et les restes d'acides gras saturés à longue chaîne (S), le total de S₂U et de S₃ étant de 10% en poids ou moins et la quantité de SU₂ étant de 30% en poids ou moins, pourcentages basés sur le poids total de la charge de départ.

4. Charge de départ huile-et-graisse résistant à la congélation suivant la revendication 3, caractérisée en ce que ledit reste d'acide gras saturé à longue chaîne possède 12 ou plus de 12 atomes de carbone.

5. Procédé de production d'une charge de départ huile-et-graisse résistant à la congélation, comprenant l'introduction de restes d'acides gras saturés à chaîne droite de 4 à 10 atomes de carbone (M) par interéchange d'esters dans une huile grasse qui est à l'état liquide aux températures ordinaires, en sorte que la quantité totale de triglycérides d'acides gras mixtes (U₂M et UM₂) constitués de restes d'acides gras insaturés (U) et de restes d'acides gras saturés à chaîne droite de 4 à 10 atomes de carbone (M) atteigne 10% en poids ou plus, sur base du poids total de la charge de départ, et le rapport U₂M à UM₂ atteint 1/3 ou plus.

6. Procédé suivant la revendication 5, caractérisé en ce que ledit interéchange d'esters est effectué en utilisant une sorte spécifique de lipase possédant une réactivité sélective avec des restes d'acides gras dans les première et troisième positions de triglycérides.

7. Procédé suivant la revendication 5 ou la revendication 6, caractérisé en ce que l'huile grasse est choisie parmi l'huile de cartame, l'huile de cartame fortement oléique, l'huile de tournesol, l'huile de tournesol fortement oléique, l'huile de colza, l'huile de graine de moutarde, l'huile de graine de coton, l'huile d'olive et l'huile de soya.

8. Procédé suivant l'une quelconque des revendications 5 à 7, caractérisé en ce que ladite huile grasse est soumise à un interéchange d'esters avec un acide gras libre ou son ester choisi parmi l'acide butyrique, l'acide caprique, l'acide caprylique, le caprate d'éthyle, le tributyrine et la tricapryline.

9. Procédé de production d'une charge de départ huile-et-graisse résistant à la congélation, caractérisé en ce que l'on mélange une charge de départ huile-et-graisse résistant à la congélation suivant la revendication 1 avec une huile grasse qui est à l'état liquide aux températures ordinaires, en sorte que la quantité totale de triglycérides d'acides gras mixtes (U₂M à UM₂) constitués de restes d'acides gras insaturés (U) et de restes d'acides gras saturés à chaîne droite comportant de 4 à 10 atomes de carbone (M) atteigne 10% en poids ou plus, sur base du poids total de la charge de départ et le rapport U₂M à UM₂ atteint 1/3 ou plus.

10. Procédé suivant la revendication 9, caractérisé en ce que l'huile grasse est choisie parmi l'huile de cartame, l'huile de cartame fortement oléique, l'huile de tournesol, l'huile de tournesol fortement oléique, l'huile de colza, l'huile de graine de moutarde, l'huile de graine de coton, l'huile d'olive et l'huile de soya.

11. Aliment congelé comprenant une quantité substantielle d'une charge de départ huile-et-graisse résistant à la congélation suivant la revendication 1.

12. Aliment congelé suivant la revendication 11, caractérisé en ce qu'il est une huile pour salade, un assaisonnement, une mayonnaise, un dessert congelé, une pâte congelée ou une margarine.
